(19) **Europäisches Patentamt**
**European Patent Office**
**Office européen des brevets**

(11) **EP 3 730 875 B1**

(12) **EUROPEAN PATENT SPECIFICATION**

(45) Date of publication and mention
of the grant of the patent:
**15.09.2021 Bulletin 2021/37**

(51) Int Cl.:
*F25B 49/02* (2006.01)        *F25B 31/00* (2006.01)
*F25B 49/00* (2006.01)

(21) Application number: **19744274.2**

(22) Date of filing: **25.01.2019**

(86) International application number:
**PCT/KR2019/001129**

(87) International publication number:
**WO 2019/147085 (01.08.2019 Gazette 2019/31)**

(54) **AIR CONDITIONER AND CONTROL METHOD THEREFOR**

KLIMAANLAGE UND STEUERUNGSVERFAHREN DAFÜR

CLIMATISEUR ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.01.2018 KR 20180009533**

(43) Date of publication of application:
**28.10.2020 Bulletin 2020/44**

(73) Proprietors:
• **Samsung Electronics Co., Ltd.**
**Gyeonggi-do 16677 (KR)**
• **Korea University Research and Business
Foundation**
**Seoul 02841 (KR)**

(72) Inventors:
• **KIM, Kyung Hoon**
**Suwon-si Gyeonggi-do 16677 (KR)**
• **MYEONG, Seong Ryeol**
**Suwon-si Gyeonggi-do 16677 (KR)**
• **KIM, Kwon Jin**
**Suwon-si Gyeonggi-do 16677 (KR)**

• **LEE, Chang Seon**
**Suwon-si Gyeonggi-do 16677 (KR)**
• **LIM, Byoung Guk**
**Suwon-si Gyeonggi-do 16677 (KR)**
• **JANG, Yong Hee**
**Suwon-si Gyeonggi-do 16677 (KR)**
• **KIM, Dong Woo**
**Seoul 02841 (KR)**
• **KIM, Yong Chan**
**Seoul 02841 (KR)**
• **LEE, Dong Chan**
**Seoul 02841 (KR)**

(74) Representative: **Gulde & Partner**
**Patent- und Rechtsanwaltskanzlei mbB**
**Wallstraße 58/59**
**10179 Berlin (DE)**

(56) References cited:
**EP-A1- 3 130 870        JP-A- 2006 242 506
JP-A- 2007 255 864       KR-A- 20040 054 281
KR-A- 20060 069 714      KR-A- 20090 069 915
KR-A- 20140 123 822**

# Description

[Technical Field]

The disclosure relates to an air conditioner in which a refrigerant is circulated in an injection method and a control method thereof.

[Background Art]

An air conditioner is a device that includes an outdoor unit to perform heat exchange between outdoor air and a refrigerant and an indoor unit to perform heat exchange between indoor air and a refrigerant, and cools or heats the indoor space using transfer of heat that occurs from evaporation and condensation processes in the refrigerant circulation through a heat pump cycle composed of compression, condensation, decompression, and evaporation. Exemplary embodiments of air conditioning devices of the prior art are disclosed in JP 2007 255864 A and EP 3 130 870 A1.

When using such a heat pump cycle, heat exchange is performed between the outdoor air and the refrigerant, and the heating performance decreases as the outside air temperature decreases.

Recently, in order to improve the heating performance of the air conditioner, an injection method in which a part of the refrigerant passed through the condenser is injected into the compressor to increase the flux of the refrigerant has been introduced.

[Disclosure]

[Technical Problem]

One aspect of the disclosure provides an air conditioner and a control method thereof that are capable of improving the heating performance and the efficiency of a heat pump while preventing damage to the compressor due to liquid back by controlling the air conditioner in an optimal state by reflecting the operating conditions.

[Technical Solution]

The present invention is directed to subject matter as defined in the claims.

According to the present invention, there is provided an air conditioner according to claim 1; and a method of controlling an air conditioner according to claim 11.

The air conditioner may further include a sensor device configured to measure a temperature of the refrigerant discharged from the compressor, a temperature of the refrigerant sucked into the compressor, and an outdoor temperature.

The sensor device may be further configured to measure at least one of a pressure of the refrigerant discharged from the compressor, a pressure of the refrigerant injected to the compressor, or a pressure of the refrigerant sucked into the compressor.

The sensor device may be further configured to measure the compressor frequency.

The controller may calculate the target DSH by substituting the compressor frequency and the compression coefficient determined by a relationship between the pressures of the refrigerant discharged from or introduced into the compressor for the correlation.

The controller may calculate the current DSH based on the pressure of the refrigerant discharged from the compressor and the temperature of the refrigerant discharged from the compressor.

The controller may inject a two-phase refrigerant including a vapor and a liquid into the injection port of the compressor by controlling the injection valve in the injection mode.

The controller may enter the injection mode by opening the injection valve when the outdoor temperature is less than or equal to a preset reference temperature.

The controller may calculate the target DSH at preset time intervals, and control the current DSCH based on the target DSH.

The air conditioner may further include an auxiliary heat exchanger installed between the injection valve and the injection port of the compressor, and configured to change a state of the refrigerant passed through the injection valve.

The method may further include measuring a pressure of the refrigerant discharged from or introduced into the compressor and the compressor frequency, wherein the calculating of the target DSH may include calculating the target DSH by substituting the compressor frequency and the compression coefficient determined by a relationship between the pressures of the refrigerant discharged from the compressor or introduced into the compressor for the correlation.

The method may further include measuring the pressure of the refrigerant discharged from the compressor and a temperature of the refrigerant discharged from the compressor, wherein the controlling of the current DSH may include controlling the injection valve for the current DSH to reach the target DSH.

[Advantageous Effects]

As is apparent from the above, the air conditioner and the control method thereof according to one aspect may improve the heating performance and the efficiency of a heat pump while preventing damage to the compressor due to liquid back by controlling the air conditioner in an optimal state by reflecting the operating conditions (compression coefficient, compressor frequency, and the like).

In addition, since a correlation between a compression coefficient, a compressor frequency, and a discharge superheat is used regardless of the type of product, the need to perform the same reliability test for each product can be obviated, thereby saving the relevant time and cost.

[Description of Drawings]

FIG. 1 is a view schematically illustrating a heating cycle of an air conditioner using an injection method.

FIG. 2 is a graph showing the heating capacity and heating load of a general air conditioner not using an injection method.

FIG. 3 is a detailed diagram illustrating the configuration of an outdoor unit and an indoor unit of an air conditioner according to an embodiment.

FIG. 4 is a control block diagram illustrating the air conditioner according to the embodiment.

FIG. 5 is a view showing the flow of a refrigerant in a cooling mode operation of the air conditioner according to the embodiment.

FIG. 6 is a view showing the flow of a refrigerant in a heating mode operation of the air conditioner according to the embodiment.

FIG. 7 is a graph showing a pressure-enthalpy (PH) diagram (a refrigerant diagram) showing the relationship between enthalpy and pressure.

FIG. 8 is a view showing constant dryness lines in the PH diagram.

FIG. 9 is a graph showing an example of a circulation process of a refrigerant in a PH diagram when the air conditioner operates in a vapor injection mode with injection of a vapor refrigerant.

FIG. 10 is a graph showing an example of a circulation process of a refrigerant in a PH diagram when the air conditioner operates in a two-phase injection mode with injection of a two phase refrigerant formed of mixture of a liquid phase refrigerant and a vapor refrigerant.

FIG. 11 is a graph showing an example of optimal discharge superheat according to a compression coefficient and a compressor frequency.

FIG. 12 is a flowchart showing a method of controlling an air conditioner according to an embodiment.

FIG. 13 is a flowchart showing a detailed process of calculating a discharge superheat in the method of controlling the air conditioner according to the embodiment.

bodiment.

[Modes of the Disclosure]

Like numerals refer to like elements throughout the specification. Not all elements of embodiments of the present disclosure will be described, and description of what are commonly known in the art or what overlap each other in the embodiments will be omitted. The terms as used throughout the specification, such as "~ part", "~ module", "~ member", "~ block", etc., may be implemented in software and/or hardware, and a plurality of "~ parts", "~ modules", "~ members", or "~ blocks" may be implemented in a single element, or a single "~ part", "~ module", "~ member", or "~ block" may include a plurality of elements.
It will be further understood that the term "connect" or its derivatives refer both to direct and indirect connection, and the indirect connection includes a connection over a wireless communication network.
It will be further understood that the terms "comprises" and/or "comprising," when used in this specification, specify the presence of stated features, integers, steps, operations, elements, and/or components, but do not preclude the presence or addition of one or more other features, integers, steps, operations, elements,
**[0025]** Throughout the specification, when a component transfers or transmits a signal or data to another component, it is not intended to exclude transfer or transmission through another component existing between the component and the other component, unless specifically stated otherwise.
As used herein, the singular forms "a," "an" and "the" are intended to include the plural forms as well, unless the context clearly indicates otherwise.
Reference numerals used for method steps are just used for convenience of explanation, but not to limit an order of the steps. Thus, unless the context clearly dictates otherwise, the written order may be practiced otherwise.
Hereinafter, embodiments of an air conditioner and a method of controlling the same according to an aspect will be described in detail with reference to the accompanying drawings.

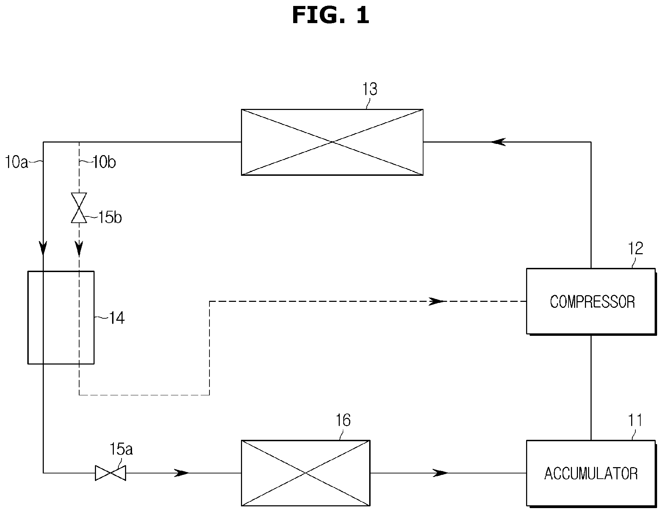

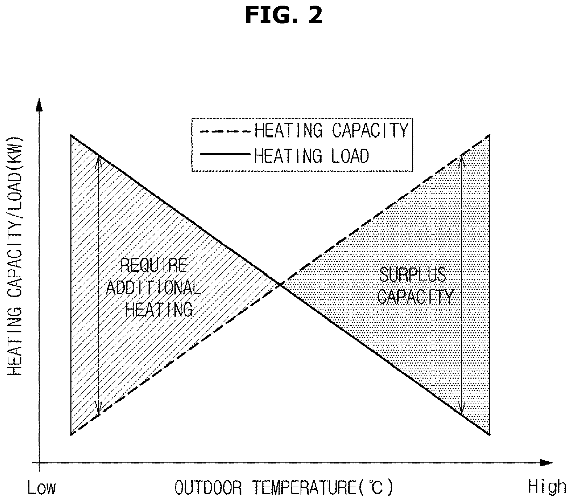

FIG. 1 is a view schematically illustrating a heating cycle of an air conditioner using an injection cycle, and FIG. 2 is a graph showing the heating capacity and heating load of a general air conditioner not using an injection method.
According to an air conditioner 10 of injection method shown in FIG. 1, a refrigerant supplied from an accumulator 11 is injected into a compressor 12, and the compressor 12 compresses the refrigerant of low temperature and low pressure and discharges a vapor refrigerant of high temperature and high pressure.
The discharged vapor refrigerant flows into an indoor heat exchanger 13 installed indoors, and the indoor heat exchanger 13 serves as a condenser for condensing the high temperature and high pressure vapor refrigerant into a high pressure liquid refrigerant of a condensing temperature or below, and in response to a change in enthalpy of the refrigerant, performs heat exchange with ambient air. In a heating cycle, the indoor heat exchanger 13 releases heat while condensing the vapor refrigerant into a liquid , thereby heating the indoor air.

When the refrigerant flows through a main pipe 10a, the low-temperature and high-pressure liquid refrigerant passed through the indoor heat exchanger 13 is expanded in the main valve 15a and is decompressed.

The low-temperature and low-pressure liquid refrigerant passed through the main valve 15a is injected into an outdoor heat exchanger 16 installed outdoors, and the outdoor heat exchanger 16 serves as an evaporator that evaporates a low-temperature and low-pressure two-phase refrigerant into a vapor refrigerant.

The vapor refrigerant passed through the outdoor heat exchanger 16 is injected back into the accumulator 11, and the accumulator 11 may filter out a refrigerant of the injected refrigerant that remains in a liquid phase without phase change.

The outdoor heat exchanger 16, which converts the liquid refrigerant into the vapor refrigerant as described above, needs to be supplied with energy from outside air. Therefore, due to the nature of the outdoor heat exchanger 16 installed outdoors, the heating capacity decreases and the heating load increases as the outside temperature decreases as shown in FIG. 2, resulting in poor heating performance. Conversely, as the outside temperature increases, the heating capacity increases and the heating load decreases, resulting in surplus capacity.

Therefore, in order to improve the heating performance of the air conditioner 10 of injection type, an injection pipe 10b is formed by branching the main pipe 10a at an exit side of the indoor heat exchanger 13 such that a part of the refrigerant passed through the indoor heat exchanger 13 is supplied to the compressor 12.

When the injection valve 15b is opened, a refrigerant passed through the indoor heat exchanger 13 may flow into the injection pipe 10b, and a liquid refrigerant flowing through the injection pipe 10b is expanded in the injection valve 15b and the pressure and temperature thereof are lowered, and while passing through an auxiliary heat exchanger 14, exchanges heat.

In a vapor injection method, only a vapor refrigerant may be supplied to the compressor 12, and in a two-phase injection method, a refrigerant formed of mixture of a liquid and vapor may be supplied to the compressor 12.

The air conditioner according to the embodiment may adopt the two-phase injection method to increase the amount of refrigerant supplied to the compressor so that the heating efficiency is further increased. However, when referred to as adopting the two-phase injection method, it is not that the air conditioner always performs only a two-phase injection but that the air conditioner may operate in a normal mode without opening an injection flow path, a vapor injection mode of supplying only a vapor refrigerant, or a two-phase injection mode of supplying a vapor refrigerant and a liquid refrigerant together according the operating environment.

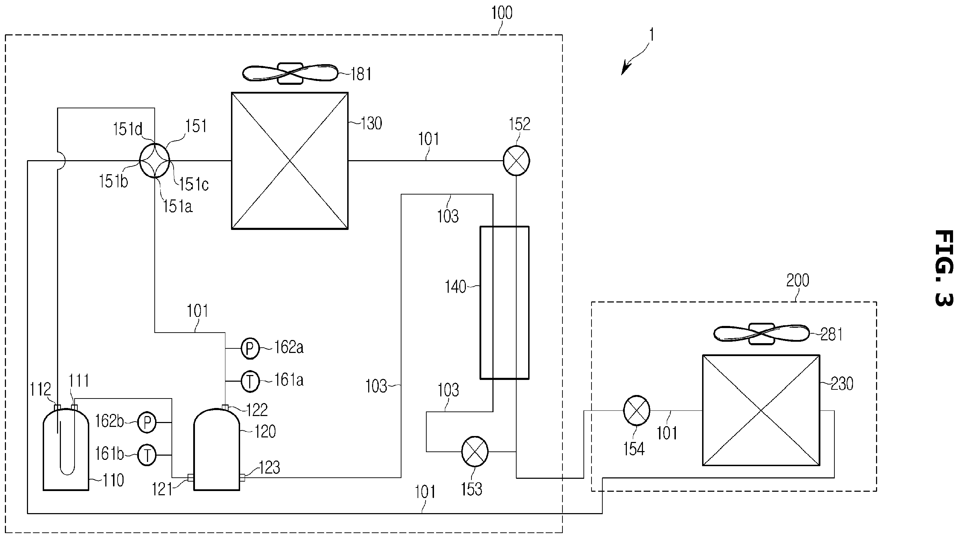

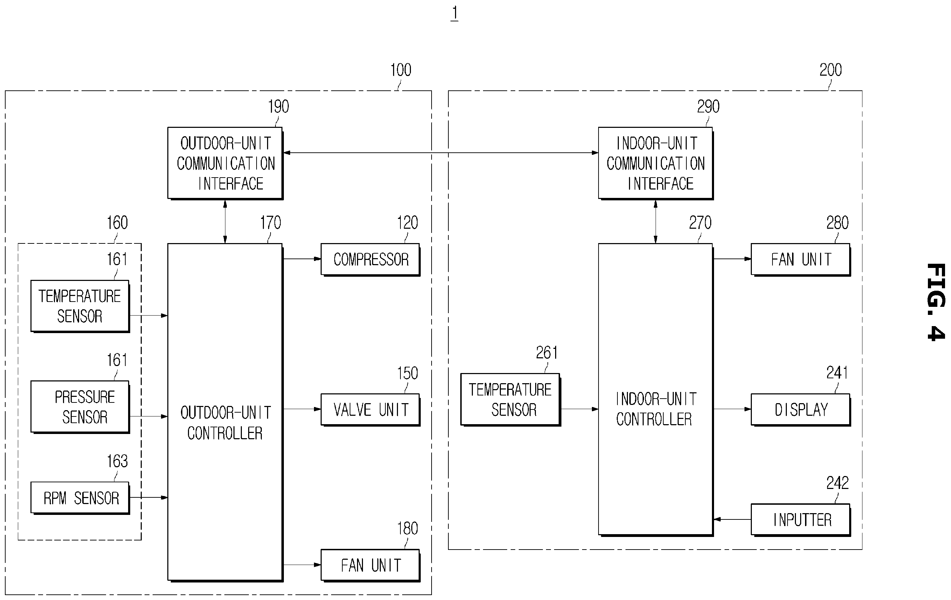

FIG. 3 is a detailed diagram illustrating the configuration of an outdoor unit and an indoor unit in an air conditioner according to an embodiment, and FIG. 4 is a control block diagram illustrating the air conditioner according to the embodiment.

The air conditioner according to the embodiment is a device capable of performing heating or both heating and cooling. In the embodiments described below, the air conditioner capable of performing both heating and cooling will be described as an example.

Referring to FIG. 3, the air conditioner 1 according to the embodiment includes an outdoor unit 100 performing heat exchange between outdoor air and a refrigerant, and an indoor unit 200 performing heat exchange between indoor air and a refrigerant.

The outdoor unit 100 and the indoor unit 200 are connected to each other through a refrigerant pipe to form a cycle. In addition, the flow of the refrigerant between the components constituting the outdoor unit 100 and the flow of the refrigerant between the components constituting the indoor unit 200 may also be achieved through a refrigerant pipe.

As a refrigerant that has heat exchanged with indoor air or outdoor air, a hydrofluorocarbon (HFC)-based refrigerant may be used, and an R32 refrigerant or a mixed refrigerant including an R32 refrigerant may be used.

The compressor 120 compresses a low-temperature and low-pressure refrigerant sucked through a suction port 121 into a high-temperature and high-pressure refrigerant, and discharges the high-temperature and high-pressure refrigerant through a discharge port 122.

For example, the compressor 120 may be implemented as a rotary compressor or a scroll compressor. However, the example of the compressor 120 is not limited thereto.

The other end of a pipe whose one end is connected to the discharge port 122 of the compressor 120 may be connected to a flow path switching valve 151. For example, the flow path switching valve 151 may be implemented as a four-way valve, and may switch the flow of a refrigerant discharged from the compressor 120 according to an operation mode (a cooling mode or a heating mode) to form a refrigerant flow path required for operation in the corresponding mode.

The flow path switching valve 151 may include a first port 151a connected to the discharge port 122 of the compressor 120, a second port 151b connected to an indoor heat exchanger 230, a third port 151c connected to an outdoor heat exchanger 130, and a fourth port 151d connected to an accumulator 110.

The outdoor heat exchanger 130 may operate as a condenser that condenses a high-temperature and high-pressure vapor refrigerant into a high-pressure liquid refrigerant of a condensing temperature or below, and in a cooling mode, and may operate as an evaporator that evaporates a low-temperature and low-pressure liquid refrigerant into a vapor refrigerant.

In response to a change in enthalpy of the refrigerant occurring in the outdoor heat exchanger 130, heat exchange occurs between the refrigerant and the outdoor air, and in order to increase the heat exchange efficiency between the refrigerant and the outdoor air, an outdoor blower fan 181 may be installed.

A main valve 152 may be installed between the outdoor heat exchanger 130 and the indoor heat exchanger 230. The main valve 152 may be embodied as an electronic expansion valve capable of adjusting the opening degree, and may be configured to depressurize the refrigerant and adjust the flux of the refrigerant, and may block the flow of the refrigerant as needed.

In addition, the accumulator 110 may be provided between the fourth port 151d of the flow path switching valve 151 and the compressor 120. The accumulator 110 may filter out a refrigerant of the refrigerant flowing into the compressor 120 from the flow path switching valve 151 that remains as a liquid without phase change, and may supply oil to the compressor 120.

In addition, an oil separator for separating oil is provided between the compressor 120 and the first port 151a of the flow path switching valve 151, so that oil is separated from the refrigerant discharged from the compressor 120.

The indoor unit 200 is a device that cools or heats the indoor space through heat exchange between the refrigerant and the indoor air. The indoor unit 200 may include the indoor heat exchanger 230 and an indoor blower fan 281, and the indoor heat exchanger and the indoor blower fan may each be provided in two or more units thereof as needed.

The indoor heat exchanger 230 operates as an evaporator that evaporates a low-temperature and low-pressure liquid refrigerant into a vapor refrigerant in a cooling mode, and operates as a condenser that condenses a high-temperature and high-pressure vapor refrigerant into a high-pressure liquid refrigerant of a condensing temperature or below in a heating mode.

The indoor blower fan 281 is installed adjacent to the indoor heat exchanger 230 to blow indoor air, thereby enhancing the heat exchange efficiency between the refrigerant circulating inside the indoor heat exchanger 230 and indoor air.

In addition, the indoor unit 200 may include an indoor unit valve 154 that controls the flow of refrigerant. The indoor unit valve 154 may be implemented as an electronic expansion valve capable of adjusting the opening degree, and configured to depressurize the refrigerant and control the flux of the refrigerant, and block the flow of the refrigerant as needed.

Meanwhile, a main pipe 101 connecting the indoor heat exchanger 230 to the outdoor heat exchanger 130 branches to form an injection pipe 103. The injection pipe 103 branches from the main pipe 101 and connects to the injection port 123 of the compressor 120 through an auxiliary heat exchanger 140.

An injection valve 153 for controlling the flux of the refrigerant flowing through the injection pipe 103 is installed on the injection pipe 103, and the injection valve 153 may be implemented as an electric valve capable of controlling the flux. For example, the injection valve 153 may be implemented as an electronic expansion valve.

The auxiliary heat exchanger 140 may enable heat exchange between refrigerants, and may ensure the degree of super-cooling of the high-pressure refrigerant when operating in a cooling mode, and may adjust the degree of dryness of the refrigerant flowing into the injection port 123 of the compressor 120 when operating in an injection mode. For example, the auxiliary heat exchanger 140 may be implemented as a double tube heat exchanger or a plate heat exchanger.

Hereinafter, contents related to control of the air conditioner 1 will be described with reference to FIG. 4.

The air conditioner 1 includes the outdoor unit 100, the indoor unit 200, and a controller. The controller may include an outdoor unit controller 170 and an indoor unit controller 270 described below.

Referring to FIG. 4, the outdoor unit 100 of the air conditioner 1 includes the outdoor unit controller 170 for controlling the compressor 120, a valve unit 150 and a fan unit 180, a sensor device 160 for measuring the temperature and pressure of refrigerant and ambient air, and an outdoor unit communicator 190 for communicating with the indoor unit 200.

The valve unit 150 may include the flow path switching valve 151, the main valve 152, and the injection valve 153 described above, and the fan unit 180 may include the outdoor blower fan 181.

The sensor device 160 may include a temperature sensor 161, a pressure sensor 162, and a rotation speed sensor 163. The sensor device 160 may measure the temperature, pressure, and rotation speed, which will be described below, according to a predetermined period, or in real time, or in response to occurrence of a specific event. In addition, the predetermined period of measurement may be changed.

The temperature sensor 161 may include a discharge temperature sensor 161a and a suction temperature sensor 161b, and the pressure sensor 162 may include a discharge pressure sensor 162a and a suction pressure sensor 162b.

The discharge temperature sensor 161a is installed at a side of the discharge port 122 of the compressor 120 to measure the temperature of the refrigerant discharged from the compressor 120, and the suction temperature sensor 161b is installed at a side of the suction port 121 of the compressor 120 to measure the temperature of the refrigerant sucked into the compressor 120.

In addition, the temperature sensor 161 may further include a sensor provided between the injection valve 153 and the auxiliary heat exchanger 140 or between the auxiliary heat exchanger 140 and the injection port 123 to measure the temperature of the refrigerant injected into the compressor 120, that is, the refrigerant introduced into the injection port 120 of the compressor 120. As described below, the pressure of the injected refrigerant may be estimated from the temperature of the injected refrigerant.

The discharge pressure sensor 162a is installed at a side of the discharge port 122 of the compressor 120 to measure the pressure of the refrigerant discharged from the compressor 120, and the suction pressure sensor 162b is installed at a side of the suction port 121 of the compressor 120 to measure the pressure of the refrigerant sucked into the compressor 120.

In addition, the temperature sensor 161 may further include an outdoor temperature sensor that measures the outdoor temperature and an indoor temperature sensor that measures the indoor temperature.

The rotation speed sensor 163 may measure the rotation speed of a motor connected to a compression compartment of the compressor 120.

The outdoor unit controller 170 may include at least one memory in which a program for controlling the overall operation of the outdoor unit 100 is stored, and at least one processor for executing the stored program.

The outdoor unit controller 170 may control the compressor 120, the valve unit 150, and the fan unit 180 based on information transmitted from the sensor device 160 or a command transmitted from the outdoor unit communicator 190.

The indoor unit 200 includes a fan unit 280, a display 241, an inputter 242, a temperature sensor 261, an indoor unit communicator 290, and the indoor unit controller 270.

The fan unit 280 may include the indoor blower fan 281 installed adjacent to the indoor heat exchanger 230 as described above.

The display 241 is implemented as a display device, such as a liquid crystal display (LCD), a light emitting diode (LED), and an organic light emitting diode (OLED), and may display information about the air conditioner 1. For example, the display 241 may display information about the current state of the air conditioner 1 (a current operation mode, a set temperature or humidity, and the like) or environmental information (a current indoor temperature or a current indoor humidity), and may display a screen for guiding an input of a user.

For example, the screen for guiding a user's input may include a screen for receiving selection of an operation mode of the air conditioner 1 as one of a heating mode and a cooling mode, and a screen for receiving selection of a target temperature or a target humidity of the air conditioner 1.

The inputter 242 may be implemented using a button, a touch pad, or the like provided on a main body of the indoor unit 200, and may further include a remote controller spaced apart from the main body of the indoor unit 200.

The inputter 242 may include a power button for turning on/off the power of the air conditioner 1, an operation selection button for receiving selection of an operation mode, a wind direction button for receiving selection of the direction of air flow, an air volume for receiving selection of the intensity of air flow, and a temperature button for temperature setting.

The temperature sensor 261 may measure the temperature of the indoor air or the temperature of the indoor heat exchanger 230.

The indoor unit communicator 290 communicates with the outdoor unit communicator 190 to exchange required information with each other.

The indoor unit controller 270 may include at least one memory in which a program for controlling the overall operation of the indoor unit 200 is stored, and at least one processor that executes the stored program.

The indoor unit controller 270 may control the fan unit 280, the display 241, or the indoor communicator 290 based on a user's command input through the inputter 242, the temperature measured by the temperature sensor 261, or information transmitted from the outdoor unit communicator 190 to the indoor unit communicator 290.

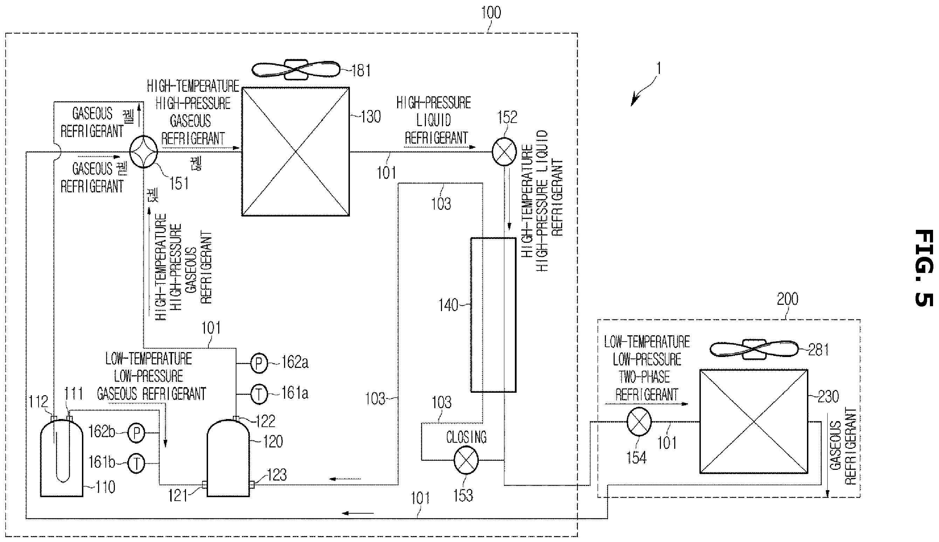

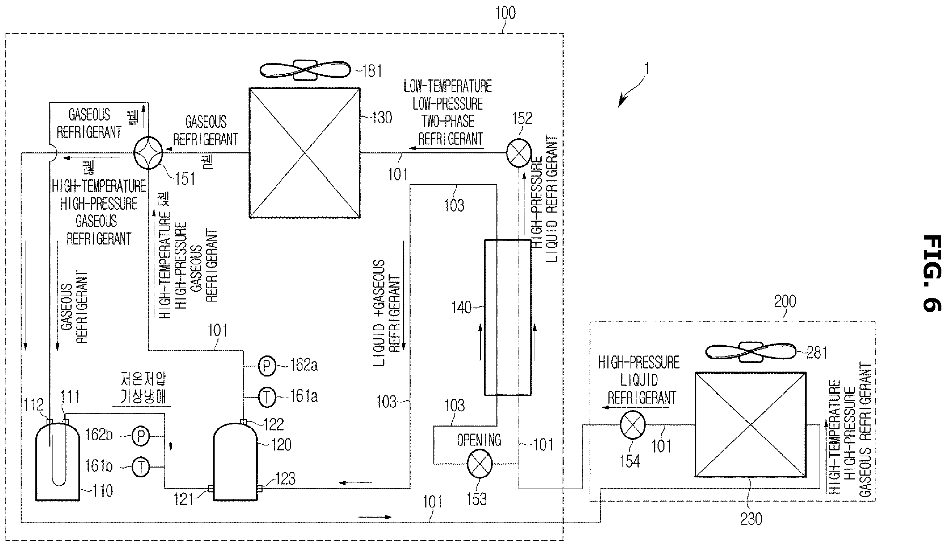

FIG. 5 is a view showing the flow of a refrigerant when the air conditioner according to the embodiment operates in a cooling mode, and FIG. 6 is a view showing the flow of a refrigerant when the air conditioner according to the embodiment operates in a heating mode. Arrows shown in FIGS. 5 and 6 indicate the flows of refrigerant.

When the user selects a cooling mode through the inputter 242, the indoor unit controller 270 and the outdoor unit controller 170 may operate the indoor unit 200 and the outdoor unit 100 in a cooling mode.

When operating in a cooling mode, the outdoor unit controller 170 controls the flow path switching valve 151 to form a refrigerant flow path in which the first port 151a is connected to the third port 151c, and the second port 151b is connected to the fourth port 151 d.

Referring to FIG. 5, a high temperature and high pressure vapor refrigerant discharged from the discharge port 122 of the compressor 120 flows into the first port 151a of the flow path switching valve 151 (①), is discharged through the third port 151c (②), flowing into the outdoor heat exchanger 130.

The outdoor heat exchanger 130 condenses the high-temperature and high-pressure vapor refrigerant into a high-pressure liquid refrigerant of a condensing temperature or below through heat exchange between the refrigerant and outdoor air, and the high-pressure liquid refrigerant discharged from the outdoor heat exchanger 130 changes into a high-temperature and high-pressure liquid refrigerant by passing through the main valve 152, and then changes into a low-temperature and low-pressure liquid as being expanded by passing through the indoor unit valve 154.

The low-temperature and low-pressure liquid refrigerant flows into the indoor heat exchanger 230, and the indoor heat exchanger 230 evaporates the liquid refrigerant into a vapor refrigerant through heat exchange between the introduced refrigerant and indoor air.

The vapor refrigerant discharged from the indoor heat exchanger 230 flows into the second port 151b of the flow path switching valve 151 (③), and the introduced vapor refrigerant flows into an inlet 112 of the accumulator 110 through the fourth port 151d (④).

The accumulator 110 filters out a liquid included in the introduced refrigerant, and discharges a low-temperature and low-pressure vapor refrigerant together with oil to the compressor 120 through an outlet 111.

The refrigerant supplied to the compressor 120 is compressed by the compressor and discharged at a high temperature and a high pressure, and the discharged refrigerant returns to the compressor through the above-described process to complete a circulation cycle, by which the air conditioner 1 operates in a cooling mode.

When the user selects a heating mode through the inputter 242, the indoor unit controller 270 and the outdoor unit controller 170 may operate the indoor unit 200 and the outdoor unit 100 in a heating mode.

When operating in a heating mode, the outdoor unit controller 170 controls the flow path switching valve 151 to form a refrigerant flow path in which the first port 151a is connected to the second port 151b, and the third port 151c is connected to the fourth port 151d.

Referring to FIG. 6, a high temperature and high pressure vapor refrigerant discharged from the discharge port 122 of the compressor 120 flows into the first port 151a of the flow path switching valve 151 (①) and is discharged through the second port 151b (②), flowing into the indoor unit 200.

The indoor heat exchanger 230 condenses the high-temperature and high-pressure vapor refrigerant into a high-pressure liquid refrigerant of a condensing temperature of below through heat exchange between the refrigerant and indoor air, and the high-pressure liquid refrigerant passed through the indoor unit valve 154 with the condensing temperature or below moves to the auxiliary heat exchanger 140.

The heating mode may be classified into a normal mode and an injection mode. For example, when the outside temperature is at or below a preset reference temperature, the injection valve 153 is opened to operate in an injection mode, and when the outside temperature is above the reference temperature, a normal mode operates. The injection mode may include a vapor injection mode and a two-phase injection mode.

When operating in a normal mode, the outdoor unit controller 170 closes the injection valve 153. When the injection valve 153 is closed, the entire refrigerant passed through the indoor heat exchanger 230 is caused to pass through the main pipe 101, flowing through the main expansion valve 152. A low-temperature and low-pressure liquid refrigerant decompressed in the main expansion valve 152 is subject to phase change into a vapor refrigerant in the outdoor heat exchanger 130 and flows into the flow path switching valve 151.

When the air conditioner 1 operates in the injection mode, the outdoor unit controller 170 opens the injection valve 153. When the injection valve 153 is opened, a part of the refrigerant passed through the indoor heat exchanger 230 is caused to pass through the injection valve 153, flowing through the injection pipe 103, and a remaining part flows through the main pipe 101.

The liquid refrigerant flowing through the injection pipe 103 is expanded in the injection valve 153, and the pressure and temperature thereof are lowered, and while passing through the auxiliary heat exchanger 140, exchanges heat with the refrigerant flowing through the main pipe 101. In the auxiliary heat exchanger 140, a part of the liquid refrigerant may change into a vapor refrigerant. Therefore, the refrigerant having heat exchanged in the auxiliary heat exchanger 140 may exist as a two-phase refrigerant formed of mixture of a liquid and a vapor.

The refrigerant formed of a mixture of a liquid and a vapor is injected through the injection pipe 103 into the injection port 123 of the compressor 120.

The refrigerant passed through the auxiliary heat exchanger 140 along the main pipe 101 is decompressed at the main expansion valve 152 to become a low temperature and low pressure two-phase refrigerant, and the outdoor heat exchanger 130 evaporates the low temperature and low pressure two-phase refrigerant into a vapor refrigerant through heat exchange with outdoor air.

The vapor refrigerant discharged from the outdoor heat exchanger 130 flows into the third port 151c of the flow path switching valve 151 (③), and the introduced vapor refrigerant passes through the fourth port 151d into the inlet 112 of the accumulator 110(④).

The accumulator 110 filters out a liquid included in the introduced refrigerant and discharges a low-temperature and low-pressure vapor refrigerant together with oil to the compressor 120 through the outlet 111.

The refrigerant supplied to the compressor 120 is compressed by the compressor and discharged at high temperature and high pressure, and the discharged refrigerant returns to the compressor 120 through the above described process to complete a circulation cycle, by which the air conditioner 1 operates in a heating mode.

As described above, the outdoor unit controller 170 may determine whether to enter the injection mode based on the outdoor temperature transmitted from the sensor device 160. In addition, after determining whether to enter the injection mode, the degree of dryness and the injection amount of the refrigerant injected into the compressor 120 are optimally adjusted through discharge superheat (DSH) control, thereby preventing damage of the compressor 120 due to liquid back, and performing an optimal injection mode. Hereinafter, an operation of performing an optimal injection mode through DSH control by the outdoor unit controller 170 will be described in detail.

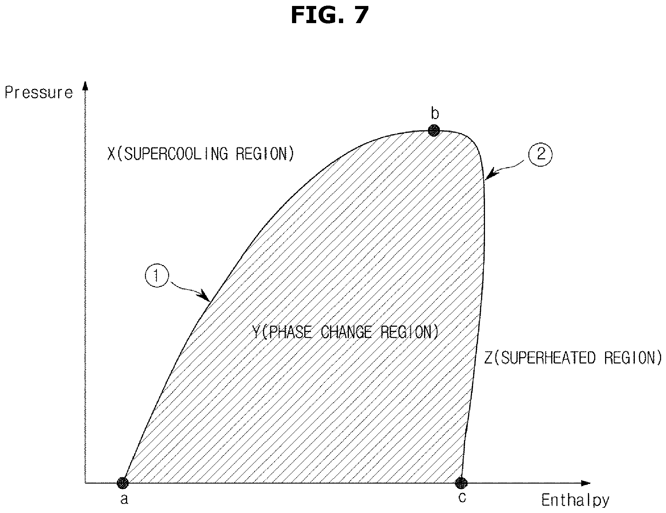

FIG. 7 is a graph showing a pressure-enthalpy (PH) diagram (a refrigerant diagram) showing the relationship between enthalpy and pressure.

The PH diagram refers a graph showing various thermodynamic properties related to refrigerant, and the PH diagram includes information about a constant pressure line, a constant enthalpy line, a saturated liquid line, a saturated vapor line, a constant temperature, a constant entropy line, a constant dryness line, and the like.

Referring to the PH diagram shown in FIG. 7, in a refrigeration cycle, a refrigerant may have a total of three states according to change in pressure. The left X region in FIG. 7 refers to a region in which the refrigerant exists as a liquid in a super-cooled state, and the middle Y region in FIG. 7 refers a region in which the refrigerant changes phase from a liquid to a vapor, that is, the refrigerant exits as a mixture of a liquid and a vapor. In addition, the right Z region in FIG. 7 refers to a region in which the entire refrigerant formed of a liquid vaporizes into a vapor.

In addition, line ① connecting a to b in FIG. 7 refers to a line for separating a refrigerant formed of a liquid from a refrigerant formed of a mixture of a liquid and a vapor. Line ① is referred to as a saturated liquid line, and since line ① is a line for separating the liquid state from the liquid and vapor mixture state, a refrigerant that is to start evaporating from a liquid to a vapor exits on line ①.

Therefore, in a region to the left of the saturated liquid line, a super-cooled liquid refrigerant having a temperature lower than that of the saturated liquid exists, and in a region to the right of the saturated liquid line, a mixture of a liquid refrigerant and a vapor refrigerant that has been vaporized from a liquid refrigerant exists. The state of a refrigerant formed of a mixture of a liquid and a vapor is referred to as a wet saturated vapor state.

Line ② connecting b to c in FIG. 7 refers to a line for separating a state of the refrigerant formed of a mixture of a liquid and a vapor from a state of the refrigerant formed of only a vapor. Line ② is referred to as a saturated vapor line, and line ② separates a vapor state from a vapor and liquid mixed state, so that a refrigerant that is to start evaporating from a liquid to a vapor exists on line ②.

The refrigerant existing on line ② refers to a refrigerant completely evaporated from a liquid, and thus exists as a dry saturated vapor without a liquid, and the temperature of the refrigerant is a saturation temperature that is the same as that of a liquid to be evaporated.

In a region to the left of the saturated vapor line, a refrigerant formed of a mixture of a liquid and a vapor exists, and in a region to the right of the saturated vapor line, only a vapor refrigerant exists, and the vapor represents a superheated vapor having a temperature higher than the saturated temperature. That is, the vapor refrigerant existing in the right region of the saturated vapor line has a temperature higher than that of a liquid that may evaporate at the same pressure.

In addition, point b where the saturated liquid line meets the saturated vapor line is referred to as a critical point, and the pressure and the temperature at the critical point are referred to as a critical pressure and a critical temperature. The critical temperature refers to the highest temperature at which the refrigerant may condense. Therefore, the refrigerant is no longer condensed above the critical temperature.

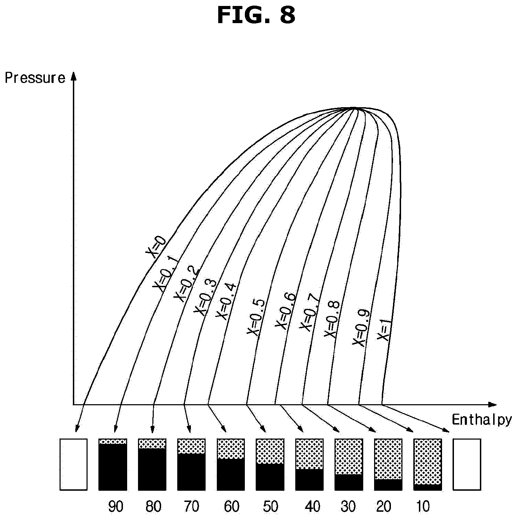

FIG. 8 is a view showing constant dryness lines in the PH diagram.

*134 constant dryness line refers to a line connecting positions having an equal ration of a liquid and a vapor when the refrigerant exists in the Y region in the PH diagram, that is, a region in which the refrigerant is formed of a mixture of a liquid and a vapor, and FIG. 8 shows eight constant dryness lines.

In FIG. 8, X denotes the proportion of a vapor. Accordingly, a refrigerant on a constant dryness line with X=0.1 is formed of a vapor refrigerant of 10% and a liquid refrigerant of 90%, and a refrigerant on a constant dryness line with X=0.7 is formed of a vapor refrigerant of 70% and a liquid refrigerant of 30%. A refrigerant on the saturated liquid line has X of 0, only including a liquid, and a refrigerant on the saturated vapor line has X of 1, only including a vapor.

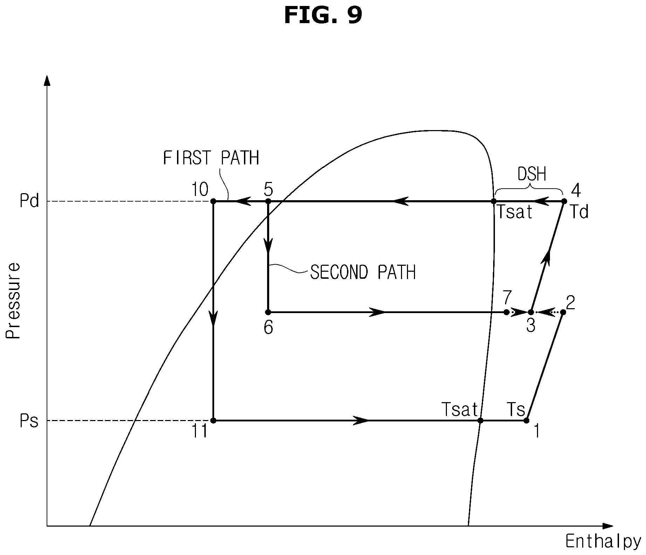

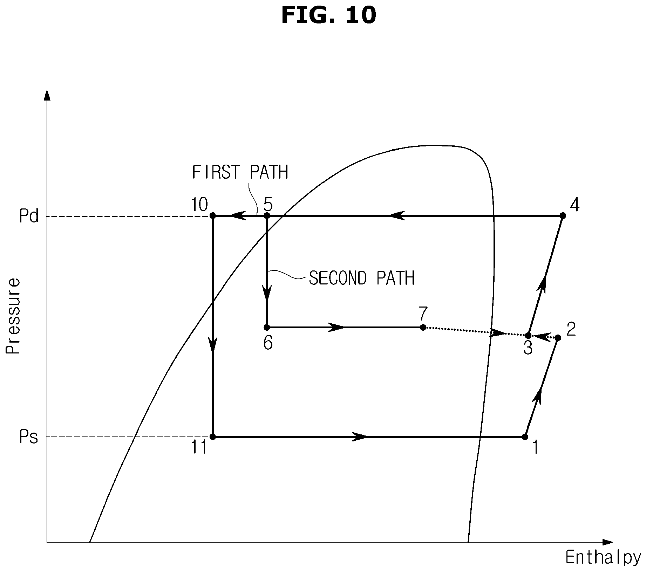

FIG. 9 is a graph showing an example of a circulation process of a refrigerant in a PH diagram when the air conditioner operates in a vapor injection mode with injection of a vapor refrigerant, and FIG. 10 is a graph showing an example of a circulation process of a refrigerant in a PH diagram when the air conditioner operates in a two-phase injection mode with injection of a two phase refrigerant formed of a mixture of a liquid and a vapor.

Referring to FIGS. 9 and 10, the low-temperature and low-pressure vapor refrigerant (①) flows into the compressor 120 to be compressed into a high-temperature and high-pressure vapor refrigerant (②→③→④). During the compression process, a vapor refrigerant or a two-phase refrigerant formed of a mixture of a liquid and a vapor may be additionally injected into the injection port 123 (⑦).

The refrigerant passed through the compressor 120 flows into the indoor heat exchanger 230, which operates as a condenser, to change into a high pressure liquid refrigerant having a condensing temperature or below (⑤), and the liquid refrigerant is divided and moved along a first path toward the outdoor heat exchanger 130 that operates as an evaporator and a second path toward the injection valve 153.

The high-pressure liquid refrigerant passed through the auxiliary heat exchanger 140 along the main pipe 101 (⑩) changes into a low-temperature and low-pressure refrigerant formed of a mixture of a liquid and a vapor by passing through the main valve 152 (⑪).

The refrigerant passed through the main valve 152 flows into the outdoor heat exchanger 130, and the refrigerant passed through the outdoor heat exchanger 130 changes into a high temperature and low pressure vapor refrigerant (①).

On the other hand, the refrigerant flowing into the injection valve 153 along the injection pipe 103 is depressurized while passing through the injection valve 153 to thereby change into a refrigerant formed of a mixture of a liquid and a vapor (⑥).

The refrigerant passed through the injection valve 153 undergoes heat exchange in the auxiliary heat exchanger 140, increasing in enthalpy. In a vapor injection mode, as shown in FIG. 9, only a vapor refrigerant is injected into the injection port 123 of the compressor 120 (⑦), and in a two-phase injection mode, a refrigerant formed of a mixture of a liquid -and a vapor is injected into the injection port 123 of the compressor 120 as shown in FIG. 10 (⑦).

Referring to FIGS. 9 and 10, DSH refers to a difference between a discharge temperature Td of the refrigerant of the compressor 120 and a saturation temperature Ts of the refrigerant at a discharge pressure Pd of the compressor 120. That is, DSH may be expressed by Equation 1 below.

$$[Equation\ 1]$$
$$DSH = Td-Tsat(at\ Pd)$$

The temperature Td of the refrigerant discharged from the compressor 120 may be measured by the discharge temperature sensor 161a, and the pressure Pd of the refrigerant discharged from the compressor 120 may be measured by the discharge pressure sensor 162a. The outdoor unit controller 170 may obtain the saturation temperature Ts at the corresponding discharge pressure Pd using the discharge pressure Pd of the refrigerant.

When operating the air conditioner 1 in the injection mode, the outdoor unit controller 179 may control the current DSH, that is, a DSH calculated using the discharge temperature of the refrigerant and the saturation temperature of the refrigerant, based on a target DSH. In this case, the target DSH may be set to an optimal DSH that may improve the heating efficiency while preventing damage to the compressor 120 due to liquid back.

The optimal DSH, which may prevent the compressor 120 from being damaged and maximize the heating efficiency, may be determined by operating conditions, such as a compression coefficient Pr and a compressor frequency f. The compression coefficient Pr is a value representing a correlation between the pressures of the refrigerant flowing into the compressor 120 and discharged from the compressor 120. For example, the compression coefficient Pr may refer to a difference or a ratio between the pressure Ps of the refrigerant sucked into the compressor 120 and the pressure Pd of the refrigerant discharged from the compressor 120, or a difference or a ratio between the injection refrigerant pressure Pi flowing into the compressor 120 and the pressure Pd of the refrigerant discharged from the compressor 120, or a difference or a ratio between the injection refrigerant pressure Pi flowing into the compressor 120 and the pressure Ps of the refrigerant sucked into the compressor 120. The compressor frequency f refers to the number of revolutions per second of the motor connected to the compression compartment of the compressor 120.

Therefore, the outdoor unit controller 170 may store the correlation between the compression coefficient Pr and the compressor frequency f and the optimal discharge superheat DSH_opt in a memory in advance, and calculate the optimum discharge superheat DSH_opt using the compression coefficient Pr and the compressor frequency f measured periodically or in real time.

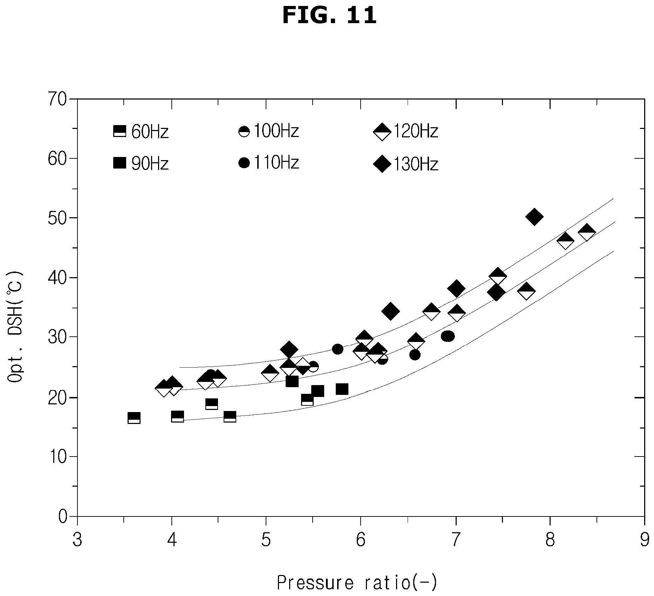

FIG. 11 is a graph showing an example of optimal discharge superheat according to compression coefficient and compressor frequency.

FIG. 11 is a graph showing correlations between compressor frequencies, compression coefficients and optimal discharge superheats obtained by an experiment with various types of heat pumps under various operating conditions. According the experiment, it can be seen that the compressor frequency and the compression coefficient are the key factors greatly affecting the optimal discharge superheat DSH_opt capable of maximizing the heating efficiency while preventing damage to the compressor 120 due to liquid back.

The correlation between the compression coefficient Pr and the compressor frequency f and the optimal discharge superheat DSH_opt may be expressed as Equation 2 below.

$$[Equation\ 2]$$
$$DSH\_opt = k1[e^{(pr/k2)} + k3*f +k4]$$

k1, k2, k3 and k4 denote constants. For example, k1=1, k2=2.418, k3=0.0262, and k4=12.786.

The correlation as in the above example may be obtained in advance by a method such as experiment, simulation, statistics, etc., and the optimal DSH calculated by the correlation is set to a target DSH that serves as a control target of the outdoor unit controller 170. That is, the outdoor unit controller 170 may calculate a target DSH using the correlation stored in advance.

When the operation mode of the air conditioner 1 enters the injection mode, the outdoor unit controller 170 sets the target DSH, and controls the DSH of the air conditioner 1 to reach the target DSH.

The outdoor unit controller 170 may calculate the compression coefficient Pr using the discharge pressure Pd of the refrigerant measured by the discharge pressure sensor 162a, the suction pressure Ps of the refrigerant measured by the suction pressure sensor 162b, or the pressure of the refrigerant flowing into the injection port 123, that is, the injection pressure. For example, the injection pressure may be estimated using the temperature measured by a temperature sensor provided between the injection valve 153 and the auxiliary heat exchanger 140.

In addition, the outdoor unit controller 170 may obtain the compressor frequency f using the rotational speed of the motor measured by the rotational speed sensor 163.

The outdoor unit controller 170 calculates a target DSH by substituting the measured compression coefficient Pr and the measured compressor frequency for the stored correlation.

In the conventional technology, the target DSH value is set to a fixed value, which causes a limitation in performing optimal control by reflecting a change according to the operating conditions. In the embodiment, as described above, the target DSH is set according to the correlation using the compression coefficient and the compressor frequency, which are the key factors for determining the optimal DSH, so that optimum control may be performable according to varied operating conditions.

As described above, the outdoor unit controller 170 controls the current DSH to reach the target DSH. For example, the outdoor unit controller 170 may adjust the opening degree of the injection valve 153 to control the current DSH to reach the target DSH. In addition, the outdoor unit controller 170 may also adjust the main valve 152 together.

Meanwhile, the outdoor unit controller 170 may periodically perform the above-described DSH control. For example, the outdoor unit controller 170 may adjust the opening degree of the injection valve 153 for the current DSH to reach the target DSH, and when a preset period has elapsed, calculate the current DSH and the target DSH again and adjust the opening degree of the injection valve 153 based on a difference therebetween.

Hereinafter, a method of controlling an air conditioner according to an embodiment will be described. In implementing the method of controlling the air conditioner according to the embodiment, the air conditioner 1 according to the above-described embodiment may be used. Therefore, the description with reference to FIGS. 1 to 11 above may apply to the method of controlling the air conditioner according to the embodiment unless specifically stated otherwise.

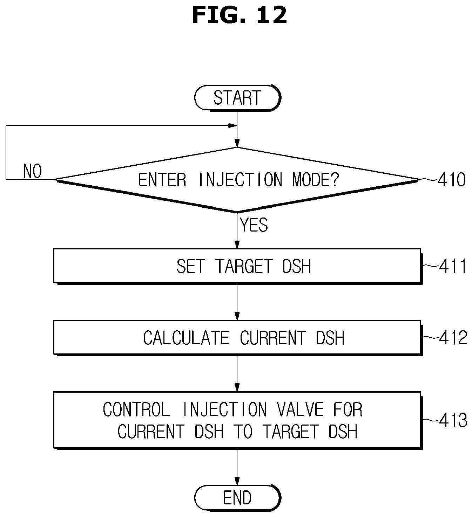

FIG. 12 is a flowchart showing a method of controlling an air conditioner according to an embodiment. Each operation constituting the method of controlling the air conditioner shown in the flowchart may be performed by the outdoor unit controller 170.

Referring to FIG. 12, it is determined whether to enter an injection mode (410). For example, the outdoor unit controller 170 may determine whether to enter the injection mode based on the outdoor air temperature transmitted from the sensor device 160. In this case, the outdoor unit controller 170 may determine to enter the injection mode when the outdoor temperature is equal to or lower than a preset reference temperature.

Upon entering the injection mode (YES in operation 410), a target DSH is set (411), and a current DSH is calculated (412). The setting of the target DSH and the calculating of the current DSH may be executed in a changed order or concurrently.

The injection valve is controlled so that the current DSH reaches the target DSH (413). For example, the outdoor unit controller 170 may control the opening degree of the injection valve 153 such that the current DSH reaches the target DSH. In addition, the outdoor unit controller 170 may also control the main valve 152 together.

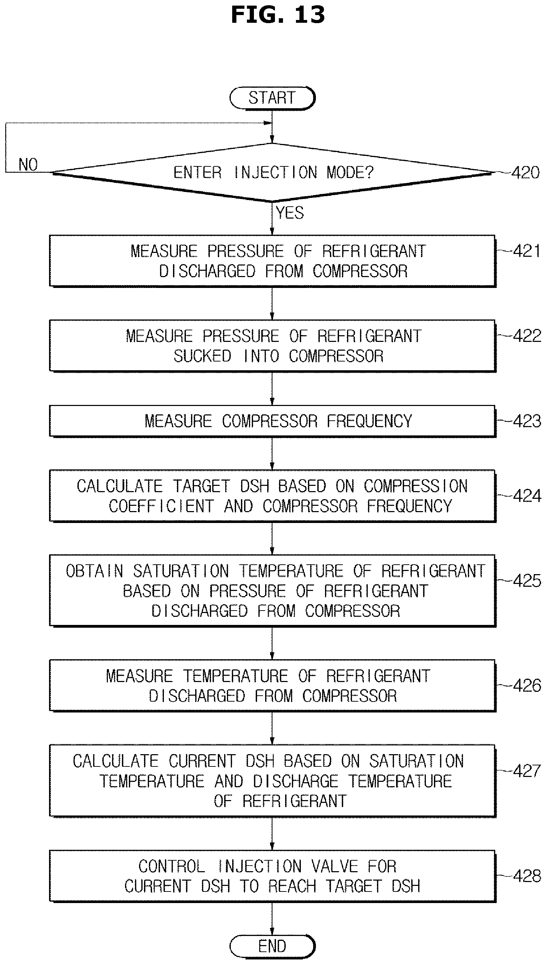

FIG. 13 is a flowchart of the method of controlling the air conditioner according to the embodiment, which shows a detailed process of calculating a DSH.

Referring to FIG. 13, it is determined whether to enter an injection mode (420), and upon entering the injection mode (YES in operation 420), the pressure Pd of the refrigerant discharged from the compressor 120 is measured (421), the pressure Ps of the refrigerant sucked into the compressor 120 is measured (422), and the compressor frequency f is measured (423). The pressure Pd of the refrigerant discharged from the compressor 120, the pressure Ps of the refrigerant sucked into the compressor 120, and the compressor frequency f are measured by the discharge pressure sensor 162a, the suction pressure sensor 162b, and the rotation speed sensor 163, respectively, and the measurement of the sensors may be performed periodically or in real time. In addition, reference numerals 422, 423, and 424 are intended to distinguish the respective measurements, rather than limiting the measurement order.

A target DSH is calculated based on the compression coefficient and the compressor frequency (424). The calculation of the target DSH may be performed by the outdoor unit controller 170, and the target DSH may be calculated by substituting a compression coefficient and a compressor frequency for a correlation between a compression coefficient, a compressor frequency, and a target DSH. The compression coefficient is a value representing a correlation between the pressures of the refrigerant flowing into the compressor 120 or discharged from the compressor 120. The description of the compression coefficient Pr is the same as that made in the embodiment of the air conditioner 1 above.

The saturation temperature Tsat of the refrigerant is obtained based on the pressure Pd of the refrigerant discharged from the compressor 120 (425), and the temperature Td of the refrigerant discharged from the compressor 120 is measured (426). The temperature Td of the refrigerant discharged from the compressor 120 may be measured by the discharge temperature sensor 161a. The temperature Td of the refrigerant discharged from the compressor 120 may also be measured periodically or in real time.

The current DSH is calculated based on the saturation temperature Tsat and the discharge temperature Td of the refrigerant (427). The current DSH may be calculated according to Equation 1 above.

The injection valve is controlled so that the current DSH reaches the target DSH (428).

According to the above-described air conditioner and the control method thereof, the air conditioner is controlled in an optimal state by reflecting operating conditions (compression coefficient, compressor frequency, and the like), thereby preventing damage to the compressor due to liquid back while improving the heating performance and the efficiency of the heat pump (coefficient of Performance: COP).

In addition, since a correlation between a compression coefficient, a compressor frequency, and a DSH may be used regardless of the product, the need to perform the reliability test for each product is obviated, thereby saving the time and cost.

## Claims

1. An air conditioner (1) comprising:

   a compressor (120) configured to compress a refrigerant;
   an indoor heat exchanger (230) configured to convert a vapor refrigerant into a liquid refrigerant in a heating mode;
   an outdoor heat exchanger (130) configured to convert a liquid refrigerant into a vapor refrigerant in the heating mode;
   a main pipe (101) connecting the indoor heat exchanger (230) to the outdoor heat exchanger (130);
   an injection pipe (103) branching from the main pipe (101) and connecting to an injection port (123) of the compressor (120);
   **characterized in that**
   the air conditioner (1) further comprises
   an injection valve (153) installed on the injection pipe (103) and configured to control a flux of the refrigerant flowing to the injection pipe (103); and
   a controller configured to calculate a target discharge superheat (DSH) based on a correlation between a compression coefficient representing a correlation between a pressure of the refrigerant flowing into the compressor (120) and a pressure of the refrigerant discharged from the compressor (120), a compressor frequency, and a DSH that are represented by an operating condition, and control a current DSH based on the target DSH, wherein the controller controls the injection valve (153) for the current DSH to reach the target DSH.

2. The air conditioner of claim 1, further comprising a sensor device configured to measure a temperature of the refrigerant discharged from the compressor, a temperature of the refrigerant sucked into the compressor, and an outdoor temperature.

3. The air conditioner of claim 2, wherein the sensor device is further configured to measure at least one of a pressure of the refrigerant discharged from the compressor, a pressure of the refrigerant injected to the compressor, or a pressure of the refrigerant sucked into the compressor.

4. The air conditioner of claim 3, wherein the sensor device is further configured to measure the compressor frequency.

5. The air conditioner of claim 4, wherein the controller calculates the target DSH by substituting the compressor frequency and the compression coefficient.

6. The air conditioner of claim 4, wherein the controller calculates the current DSH based on the pressure of the refrigerant discharged from the compressor and the temperature of the refrigerant discharged from the compressor.

7. The air conditioner of claim 1, wherein the controller injects a two-phase refrigerant including a vapor and a liquid into the injection port of the compressor by controlling the injection valve in the injection mode.

8. The air conditioner of claim 2, wherein the controller enters the injection mode by opening the injection valve when the outdoor temperature is less than or equal to a preset reference temperature.

9. The air condition of claim 1, wherein the controller calculates the target DSH at preset time intervals, and controls the current DSCH based on the target DSH.

10. The air conditioner of claim 1, further comprising an auxiliary heat exchanger installed between the injection valve and the injection port of the compressor, and configured to change a state of the refrigerant passed through the injection valve.

11. A method of controlling an air conditioner including a compressor configured to compress a refrigerant, an injection pipe connected to an injection port of the compressor, and an injection valve configured to control a flux of the refrigerant flowing to the injection pipe, the method comprising:

determining whether to enter an injection mode based on an outdoor temperature;

calculating, upon entering the injection mode, a target discharge superheat (DSH) based on a correlation between a compression coefficient representing a correlation between a pressure of the refrigerant flowing into the compressor (120) and a pressure of the refrigerant discharged from the compressor (120), a compressor frequency, and a DSH; and

controlling a current DSH based on the target DSH, wherein the controlling of the current DSH includes controlling the injection valve for the current DSH to reach the target DSH.

12. The method of claim 11, further comprising measuring a pressure of the refrigerant discharged from and introduced into the compressor and the compressor frequency,

wherein the calculating of the target DSH includes calculating the target DSH by substituting the compressor frequency and the compression coefficient.

13. The method of claim 12, further comprising measuring the pressure of the refrigerant discharged from the compressor and a temperature of the refrigerant discharged from the compressor,

wherein the controlling of the current DSH includes controlling the injection valve for the current DSH to reach the target DSH.

**Patentansprüche**

1. Klimaanlage (1), umfassend:

einen Verdichter (120), der dazu ausgestaltet ist, ein Kältemittel zu verdichten;

einen Innenraum-Wärmetauscher (230), der dazu ausgestaltet ist, in einem Heizmodus ein dampfförmiges Kältemittel in ein flüssiges Kältemittel umzuwandeln;

einen Außenraum-Wärmetauscher (130), der dazu ausgestaltet ist, in dem Heizmodus ein flüssiges Kältemittel in ein dampfförmiges Kältemittel umzuwandeln;

eine Hauptleitung (101), die den Innenraum-Wärmetauscher (230) mit dem Außenraum-Wärmetauscher (130) verbindet;

eine Einspritzleitung (103), die von der Hauptleitung (101) abzweigt und mit einer Einspritzöffnung (123) des Verdichters (120) verbunden ist;

**dadurch gekennzeichnet, dass**

die Klimaanlage (1) ferner umfasst:

ein Einspritzventil (153), das an der Einspritzleitung (103) installiert und dazu ausgestaltet ist, einen Strom des Kältemittels, das zu der Einspritzleitung (103) strömt, zu regeln; und

eine Steuerung, die dazu ausgestaltet ist, basierend auf einer Korrelation zwischen einem Verdichtungskoeffizienten, der eine Korrelation zwischen einem Druck des Kältemittels, das in den Verdichter (120) strömt, und einem Druck des Kältemittels, das aus dem Verdichter (120) abgegeben wird, darstellt, einer Verdichterfrequenz und einer DSH, die durch einen Betriebszustand dargestellt sind, eine Soll-Austrittsgasüberhitzung (*discharge superheat*-DSH) zu berechnen und basierend auf der Soll-DSH eine aktuelle DSH zu steuern, wobei die Steuerung das Einspritzventil (153) dahingehend steuert, dass die aktuelle DSH die Soll-DSH erreicht.

2. Klimaanlage nach Anspruch 1, die ferner eine Sensorvorrichtung umfasst, die dazu ausgestaltet ist, eine Temperatur des Kältemittels, das aus dem Verdichter abgegeben wird, eine Temperatur des Kältemittels, das in den Verdichter eingesaugt wird, und eine Außentemperatur zu messen.

3. Klimaanlage nach Anspruch 2, wobei die Sensorvorrichtung ferner dazu ausgestaltet ist, wenigstens eines aus einem Druck des Kältemittels, das aus dem Verdichter abgegeben wird, einem Druck des Kältemittels, das in den Verdichter eingespritzt wird, oder einem Druck des Kältemittels, das in den Verdichter eingesaugt wird, zu messen.

4. Klimaanlage nach Anspruch 3, wobei die Sensorvorrichtung ferner dazu ausgestaltet ist, die Verdichterfrequenz zu messen.

5. Klimaanlage nach Anspruch 4, wobei die Steuerung die Soll-DSH durch Ersetzen der Verdichterfrequenz und des Verdichtungskoeffizienten berechnet.

6. Klimaanlage nach Anspruch 4, wobei die Steuerung die aktuelle DSH basierend auf dem Druck des Kältemittels, das aus dem Verdichter abgegeben wird, und der Temperatur des Kältemittels, das aus dem Verdichter abgegeben wird, berechnet.

7. Klimaanlage nach Anspruch 1, wobei die Steuerung durch Steuern des Einspritzventils in dem Einspritzmodus ein Zweiphasenkältemittel, das einen Dampf und eine Flüssigkeit umfasst, in die Einspritzöffnung des Verdichters einspritzt.

8. Klimaanlage nach Anspruch 2, wobei die Steuerung durch Öffnen des Einspritzventils in den Einspritzmodus wechselt, wenn die Außentemperatur niedriger als oder gleich eine(r) vorab festgelegte(n) Referenztemperatur ist.

9. Klimaanlage nach Anspruch 1, wobei die Steuerung die Soll-DSH in vorab festgelegten Zeitabständen berechnet und die aktuelle DSH basierend auf der Soll-DSH steuert.

10. Klimaanlage nach Anspruch 1, die ferner einen Hilfswärmetauscher umfasst, der zwischen dem Einspritzventil und der Einspritzöffnung des Verdichters installiert und dazu ausgestaltet ist, einen Zustand des Kältemittels, das durch das Einspritzventil geleitet wird, zu ändern.

11. Verfahren zur Steuerung einer Klimaanlage, die einen Verdichter, der dazu ausgestaltet ist, ein Kältemittel zu verdichten, eine Einspritzleitung, die mit einer Einspritzöffnung des Verdichters verbunden ist, und ein Einspritzventil, das dazu ausgestaltet ist, einen Strom des Kältemittels, das zu der Einspritzleitung strömt, zu regeln, umfasst, wobei das Verfahren umfasst:

Bestimmen, ob in einen Einspritzmodus gewechselt werden soll, basierend auf einer Außentemperatur;
Berechnen - beim Wechseln in den Einspritzmodus - einer Soll-Austrittsgasüberhitzung (*discharge superheat* - DSH) basierend auf einer Korrelation zwischen einem Verdichtungskoeffizienten, der eine Korrelation zwischen einem Druck des Kältemittels, das in den Verdichter (120) strömt, und einem Druck des Kältemittels, das aus dem Verdichter (120) abgegeben wird, darstellt, einer Verdichterfrequenz und einer DSH; und
Steuern einer aktuellen DSH basierend auf der Soll-DSH, wobei das Steuern der aktuellen DSH ein Steuern des Einspritzventils dahingehend, dass die aktuelle DSH die Soll-DSH erreicht, umfasst.

12. Verfahren nach Anspruch 11, das ferner ein Messen eines Drucks des Kältemittels, das aus dem Verdichter abgegeben und in diesen eingeleitet wird, und der Verdichterfrequenz umfasst,
wobei das Berechnen der Soll-DSH ein Berechnen der Soll-DSH durch Ersetzen der Verdichterfrequenz und des Verdichtungskoeffizienten umfasst.

13. Verfahren nach Anspruch 12, das ferner ein Messen des Drucks des Kältemittels, das aus dem Verdichter abgegeben wird, und einer Temperatur des Kältemittels, das aus dem Verdichter abgegeben wird, umfasst,
wobei das Steuern der aktuellen DSH ein Steuern des Einspritzventils dahingehend, dass die aktuelle DSH die Soll-DSH erreicht, umfasst.

## Revendications

1. Un climatiseur (1) comprenant :

un compresseur (120) configuré pour comprimer un réfrigérant ;
un échangeur de chaleur intérieur (230) configuré pour convertir un réfrigérant vapeur en un réfrigérant liquide dans un mode chauffage ;
un échangeur de chaleur extérieur (130) configuré pour convertir un réfrigérant liquide en un réfrigérant vapeur dans le mode chauffage ;
un tuyau principal (101) raccordant l'échangeur de chaleur intérieur (230) à l'échangeur de chaleur extérieur (130) ;
un tuyau d'injection (103) dérivant du tuyau principal (101) et se raccordant à un orifice d'injection (123) du compresseur (120) ;
**caractérisé en ce que**
le climatiseur (1) comprend en outre
une soupape d'injection (153) installée sur le tuyau d'injection (103) et configurée pour commander un flux du réfrigérant s'écoulant vers le tuyau d'injection (103) ; et
un dispositif de contrôle configuré pour calculer une surchauffe de sortie (*discharge superheat* - DSH) cible sur la base d'une corrélation entre un coefficient de compression représentant une corrélation entre une pression du réfrigérant s'écoulant dans le compresseur (120) et une pression du réfrigérant sortant du compresseur (120), une fréquence du compresseur, et une DSH qui sont représentées par une condition de fonctionnement, et pour commander une DSH actuelle sur la base de la DSH cible, où le dispositif de contrôle commande la soupape d'injection (153) pour que la DSH actuelle atteigne la DSH cible.

2. Climatiseur selon la revendication 1, comprenant en outre un dispositif de capteur configuré pour mesurer une température du réfrigérant sortant du compresseur, une température du réfrigérant aspiré dans le compresseur, et une température extérieure.

3. Climatiseur selon la revendication 2,
où le dispositif de capteur est en outre configuré pour mesurer au moins une pression du réfrigérant sortant du compresseur, une pression du réfrigérant injecté dans le compresseur, ou une pression du réfrigérant aspiré dans le compresseur.

4. Climatiseur selon la revendication 3, où le dispositif de capteur est en outre configuré pour mesurer la fréquence du compresseur.

**5.** Climatiseur selon la revendication 4, où le dispositif de contrôle calcule la DSH cible en substituant la fréquence du compresseur et le coefficient de compression.

**6.** Climatiseur selon la revendication 4, où le dispositif de contrôle calcule la DSH actuelle sur la base de la pression du réfrigérant sortant du compresseur et de la température du réfrigérant sortant du compresseur.

**7.** Climatiseur selon la revendication 1, où le dispositif de contrôle injecte un réfrigérant biphasé comprenant une vapeur et un liquide dans l'orifice d'injection du compresseur en commandant la soupape d'injection dans le mode injection.

**8.** Climatiseur selon la revendication 2, où le dispositif de contrôle entre dans le mode injection en ouvrant la soupape d'injection lorsque la température extérieure est inférieure ou égale à une température de référence prédéfinie.

**9.** Climatiseur selon la revendication 1, où le dispositif de contrôle calcule la DSH cible à des intervalles de temps prédéfinis, et commande la DSH actuelle sur la base de la DSH cible.

**10.** Climatiseur selon la revendication 1, comprenant en outre un échangeur de chaleur auxiliaire installé entre la soupape d'injection et l'orifice d'injection du compresseur, et configuré pour changer un état du réfrigérant passé par la soupape d'injection.

**11.** Procédé de commande d'un climatiseur comprenant un compresseur configuré pour comprimer un réfrigérant, un tuyau d'injection raccordé à un orifice d'injection du compresseur, et une soupape d'injection configurée pour commander un flux du réfrigérant s'écoulant vers le tuyau d'injection, le procédé comprenant :

la détermination de la nécessité d'entrer dans un mode injection sur la base d'une température extérieure ;
le calcul, lors de l'entrée dans le mode injection, d'une surchauffe de sortie (*discharge superheat* - DSH) cible sur la base d'une corrélation entre un coefficient de compression représentant une corrélation entre une pression du réfrigérant s'écoulant dans le compresseur (120) et une pression du réfrigérant sortant du compresseur (120), une fréquence du compresseur, et une DSH ; et
la commande d'une DSH actuelle sur la base de la DSH cible, où la commande de la DSH actuelle comprend la commande de la soupape d'injection pour que la DSH actuelle atteigne la DSH cible.

**12.** Procédé selon la revendication 11, comprenant en outre la mesure d'une pression du réfrigérant sortant du compresseur et introduit dans le compresseur et la fréquence du compresseur,
où le calcul de la DSH cible comprend le calcul de la DSH cible en substituant la fréquence du compresseur et le coefficient de compression.

**13.** Procédé selon la revendication 12, comprenant en outre la mesure de la pression du réfrigérant sortant du compresseur et d'une température du réfrigérant sortant du compresseur,
où la commande de la DSH actuelle comprend la commande de la soupape d'injection pour que la DSH actuelle atteigne la DSH cible.

# FIG. 1

## FIG. 2

# FIG. 3

**FIG. 4**

EP 3 730 875 B1

1

100

190
OUTDOOR-UNIT COMMUNICATION INTERFACE

200

290
INDOOR-UNIT COMMUNICATION INTERFACE

160

161
TEMPERATURE SENSOR

161
PRESSURE SENSOR

163
RPM SENSOR

170
OUTDOOR-UNIT CONTROLLER

120
COMPRESSOR

150
VALVE UNIT

180
FAN UNIT

261
TEMPERATURE SENSOR

270
INDOOR-UNIT CONTROLLER

280
FAN UNIT

241
DISPLAY

242
INPUTTER

18

# FIG. 5

# FIG. 6

# FIG. 7

# FIG. 8

# FIG. 9

# FIG. 10

# FIG. 11

# FIG. 12

START

ENTER INJECTION MODE? ~410

NO

YES

SET TARGET DSH ~411

CALCULATE CURRENT DSH ~412

CONTROL INJECTION VALVE FOR
CURRENT DSH TO TARGET DSH ~413

END

# FIG. 13

START

NO ⟵ ENTER INJECTION MODE? ⟶ 420

YES

MEASURE PRESSURE OF REFRIGERANT DISCHARGED FROM COMPRESSOR ~421

MEASURE PRESSURE OF REFRIGERANT SUCKED INTO COMPRESSOR ~422

MEASURE COMPRESSOR FREQUENCY ~423

CALCULATE TARGET DSH BASED ON COMPRESSION COEFFICIENT AND COMPRESSOR FREQUENCY ~424

OBTAIN SATURATION TEMPERATURE OF REFRIGERANT BASED ON PRESSURE OF REFRIGERANT DISCHARGED FROM COMPRESSOR ~425

MEASURE TEMPERATURE OF REFRIGERANT DISCHARGED FROM COMPRESSOR ~426

CALCULATE CURRENT DSH BASED ON SATURATION TEMPERATURE AND DISCHARGE TEMPERATURE OF REFRIGERANT ~427

CONTROL INJECTION VALVE FOR CURRENT DSH TO REACH TARGET DSH ~428

END

**EP 3 730 875 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007255864 A

- EP 3130870 A1